# EUROPEAN PATENT SPECIFICATION

(11) **EP 4 330 959 B1**
(45) Date of publication and mention of the grant of the patent: **14.10.2026**
(21) Application number: 21938269.4
(22) Date of filing: 27.04.2021
(51) Int. Cl.: G10L 15/08, G10L 15/02, G10L 15/06, G10L 15/16, G06N 3/0464, G06N 3/0495, G06N 3/09, G10L 25/24

(54) **KEYWORD SPOTTING METHOD BASED ON NEURAL NETWORK**
SCHLÜSSELWORTAUFFINDUNGSVERFAHREN AUF DER BASIS EINES NEURONALEN NETZWERKS
PROCÉDÉ DE REPÉRAGE DE MOTS-CLÉS BASÉ SUR UN RÉSEAU NEURONAL

(43) Date of publication of application: 06.03.2024
(73) Proprietor: Harman International Industries, Incorporated, Stamford, CT 06901 (US)
(72) Inventor: ZHENG, Jianwen, Shenzhen, Guangdong 518067 (CN); SHIH, Shao-Fu, Mountain View, California 94043 (US); LI, Kai, Shenzhen, Guangdong 518067 (CN); KATEPALLEWAR, Mrugesh Madhukarrao, Sunnyvale, California 94087 (US)
(74) Representative: Rummler, Felix
(86) International application number: PCT/CN2021/090268
(87) International publication number: WO 2022/226782

(56) References cited:
- CN-A- 106 297 776
- CN-A- 111 933 124
- CN-A- 111 933 124
- US-A1- 2017 116 994
- US-A1- 2020 349 927
- US-A1- 2021 065 699
- US-B1- 9 697 828
- SIMON MITTERMAIER ET AL: "Small-Footprint Keyword Spotting on Raw Audio Data with Sinc-Convolutions", ARXIV.ORG, CORNELL UNIVERSITY LIBRARY, 201 OLIN LIBRARY CORNELL UNIVERSITY ITHACA, NY 14853, 5 November 2019 (2019-11-05), XP081525926
- PETERM?LGAARD S?RENSEN ET AL: "A depthwise separable convolutional neural network for keyword spotting on an embedded system", 25 June 2020, EURASIP JOURNAL ON AUDIO, SPEECH, AND MUSIC PROCESSING, BIOMED CENTRAL LTD, LONDON, UK, PAGE(S) 1 - 14, XP021278514
- YUNDONG ZHANG ET AL: "Hello Edge: Keyword Spotting on Microcontrollers", ARXIV.ORG, CORNELL UNIVERSITY LIBRARY, 201 OLIN LIBRARY CORNELL UNIVERSITY ITHACA, NY 14853, 20 November 2017 (2017-11-20), XP081319805

## Description

### TECHNICAL FIELD

The present disclosure relates generally to keyword spotting (KWS) technology. More particularly, the present disclosure relates to a keyword spotting method based on a neural network acoustic model.

### BACKGROUND

With the rapid development of mobile devices or consumer devices for the home, such as mobile phones or smart speakers, the speech recognition related technologies are becoming increasingly popular. Recent advance in machine learning breakthrough allowed machines with microphones able to parse and translate human languages. For example, the Google and Bing voice translations would be able to translate one language to another. Voice recognition technology such as Google Voice Assistant and Amazon Alexa Services has made a positive impact to our lives. With the help of the voice recognition, we are now able to let the machine perform simple tasks more naturally.

Because of the model complexity and highly required computation, the common powerful speech recognition is usually performed in the cloud. For both practical and privacy concerns, currently many devices are required to run a compact speech recognition locally to detect simple commands and react. Traditional approaches for the compact speech recognition typically involve the Hidden Markov Models (HMMs) for modeling both keyword and non-keyword speech segments, respectively. During the runtime, a traversal algorithm is generally applied to find the best path in the decoding graph as best match result. And some algorithms use a large vocabulary continuous speech recognizer to generate a rich lattice and search the keyword among all possible paths in the lattices. Since traditional traversal-based algorithms depend on cascading conditional probability and large-scale pattern comparison, these algorithms are prone to embedded system clock speed and bit-depth limitations. Moreover, the speech recognition is commonly too computationally expensive to perform on embedded systems due to battery and computation reasons. This has been become a major barrier to entry to wider audience for voice assistance to further integrate into our daily life.

Considering the computation and power consumption issue, there are multiple examples of trimming down the speech recognition algorithm down to keyword spotting (KWS). the keyword could be used as wakeup words such as "Okay, Google" and "Alexa" and as simple commands on embedded systems such as "Turn On" and "Turn Off". However, a common problem for the standard KWS is the algorithm has limited tolerance against human variance. This variance includes individual user addresses simple commands differently and accents when speaking the same word. In addition, users may not remember the pre-determined keywords stored in the system, or the commands store may not be what the user needed. This is a huge user experience problem which the standard KWS algorithm cannot solve because it is designed by identifying fixed acoustic models.

Therefore, more advanced, and efficient models with small size and low latency, which may also run KWS under user customization are required.

CN 111 933 124 A discloses a keyword detection method capable of supporting self-defined wake-up words using a neural network.

SIMON MITTERMAIER ET AL: "Small-Footprint Keyword Spotting on Raw Audio Data with Sine-Convolutions", CORNELL UNIVERSITY LIBRARY, 201 OLIN LIBRARY CORNELL UNIVERSITY ITHACA, NY 14853, 5 November 2019 discloses a method for Keyword Spotting (KWS) enabling speech-based user interaction on smart devices.

Peter Molgaard Sorensen, Bastian Epp and Tobias May: "A depth wise separable convolutional neural network for keyword spotting on an embedded system", 25 June 2020 (2020-06-25), EURASIP JOURNAL ON AUDIO, SPEECH, AND MUSIC PROCESSING, BIOMED CENTRAL LTD, LONDON, UK, PAGE(S) 1-14 discloses a keyword spotting algorithm implemented on an embedded system using a depth wise separable convolutional neural network classifier.

US 2020/349927 A1 discloses devices, systems, and methods for on-device detection of wake up words.

YUNDONG ZHANG ET AL: "Hello Edge: Keyword Spotting on Microcontrollers", ARXIV.ORG, CORNELL UNIVERSITY LIBRARY, 201 OLIN LIBRARY CORNELL UNIVERSITY ITHACA, NY 14853, 20 November 2017 discloses the evaluation of a neural network that performs keyword spotting based on user speech, where the neural network runs on resource-constrained microcontrollers.

### SUMMARY

The present invention is defined in the independent claims. The dependent claims recite selected optional features.

In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

A keyword spotting method provided in the present invention is based on a neural network (NN) acoustic model. The method may comprise the following steps to detect user-customized keywords from a user. At first the user may record his key words of interests as audio fragments of a plurality of target keywords by using a microphone and register templates of the plurality of target keywords into the KWS system. The templates of the plurality of target keywords are registered to the NN acoustic model by marking each of the audio fragments of the plurality of target keywords with phonemes to generate an acoustic model sequence for the each of the plurality of target keywords, respectively, and the acoustic model sequences of the templates are stored in a microcontroller unit (MCU). When the method is in use to detect those registered keywords in speech, a voice activity detector is on working to detect speech inputs from the user. Once detected, voice frames of the speech input are marked with the phonemes to construct an acoustic sequence of the speech input, and then input to the model to be compared with each one of registered templates of the target keywords through the NN acoustic model. By input both the acoustic sequence of the speech input and each of the acoustic model sequences of the templates into the NN acoustic model, the model may outputs the probability of the voice frames of the speech input same as the one of the plurality of target keyword fragments. In case that the input speech is similar enough to one of the pre-registered sequences, it can be determined that the keyword is spot out from the speech input.

A non-transitory computer readable medium storing instructions which, when processed by a processor or a microcontroller unit (MCU), performs the keyword spotting method based on the NN acoustic model in the present disclosure.

### BRIEF DESCRIPTION OF THE DRAWINGS

The present disclosure may be better understood from reading the following description of non-limiting embodiments, with reference to the attached drawings. In the figures, like reference numeral designates corresponding parts, wherein:
Figure 1 illustrates an example NN acoustic model used in the acoustic model for keyword spotting according to one and more embodiments of the present disclosure;
Figure 2 shows an example flowchart of the training procedure to the NN acoustic model of Figure 1;
Figure. 3 shows an example flowchart of the keyword registration to the NN acoustic model according to one and more embodiments of the present disclosure;
Figure 4 shows an example flowchart of the keyword detection using the NN acoustic model according to one and more embodiments of the present disclosure.

### DETAILED DESCRIPTION

The detailed description of the embodiments of the present disclosure is disclosed hereinafter; however, it is understood that the disclosed embodiments are merely exemplary of the present disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. Moreover, the NN acoustic model hereinafter may be equivalently called as the NN model, or simply the model.

The method for keyword spotting provided in the present disclosure adopts the NN acoustic model which is designed to enable user customization and to allow post training keyword registrations. The KWS method may be used on products which come with microphone and require small set of local commands. It is distinguishable by any network free devices with end user customizable keywords.

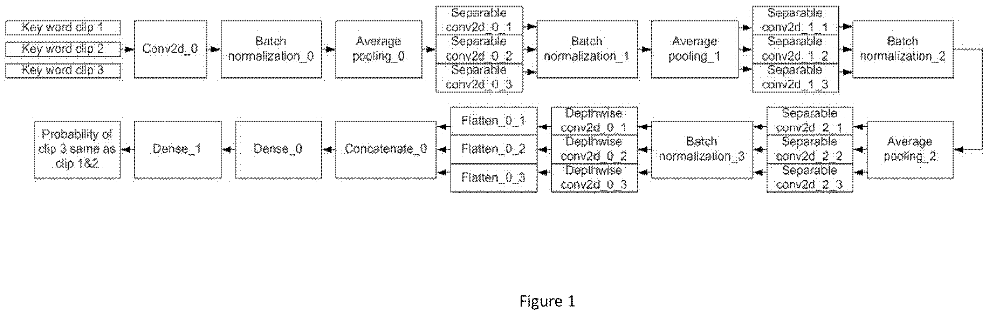

In particular, the KWS method may compare the user real-time speech input detected by the voice activity detector with the user pre-registered keywords one by one, so as to spot the keyword in the user's real-time speech input, which may be a trigger command for certain actions assigned in the user interaction. It can be seen that the input side of the NN model should usually include at least two inputs of the user real-time speech input and the user pre-registered keyword for the comparison, respectively. In practical applications, when the real-time speech input is preferably compared with more than one templates of the keyword at a time, the keyword in the speech may be detected with a higher probability. Therefore, the input side of the actual design NN model may comprises more than two inputs, as the three inputs shown in Figure 1.

Figure 1 illustrates an example NN acoustic model for the keyword spotting according to one and more embodiments of the present disclosure. The three keyword clips input to the neural network comprise the first and second inputs (Key word clip 1, Key word clip 2) that are the templates of a key word, and the third one (Key word clip 3) is the real-time recorded speech signal by the microphone, respectively. These keyword clips input to the NN acoustic model of figure 1 are required in form of Mel spectrograms of for example Mel-frequency cepstral coefficients (MFCCs). The MFCCs are the cepstral coefficients extracted in the frequency domain with the Mel scale (i.e., in the Mel domain), which describes the non-linear characteristics of the human ear's perception of frequency. Each frame of the Mel spectrogram of MFCCs may be encoded by a frame size of phoneme sequence abstracted from one of multiple frames divided by a human vocal fragment. The encoded MFCCs of the phonemes are input into the NN acoustic model of Figure 1. As can be conceived by those skilled in the art, the size of each frame divided here depends on the characteristics of the corresponding human vocal and is related to the size of the input Mel spectrogram. In a way of example, when the model is configured to process the Mel spectrograms of size 512 ×32, at the sampling rate of 16kHz, the frame then may be in size of 512 × 32/16000, which is about 1s. Using different size frames may change the performance of the model. For each input, multiple Mel spectrograms of MFCCs in one keyword clip may enter the model frame by frame if the keyword clip is of a larger size than one frame. Another example form of the Mel spectrogram may be Mel-frequency spectral coefficients (MFSCs), which may be used herein instead of the MFCCs. It should be noted that Figure 1 shows only an exemplary NN acoustic model of the present invention, the input side of the model may include, for example, but not limited to three keyword clips, and the number thereof may be various depending on the actual situation. The three inputs are set in the example of Figure 1, which is considered as a relatively appropriate choice in use in view of the amount of computations and output effects of the system.

The NN acoustic model as shown in Figure 1 comprises several two-dimensional convolution layers to process the keyword clips entered in the form of the Mel spectrogram. As shown in Figure 1, the NN model comprises at first a two-dimensional convolution layer denoted as conv2d (Conv2d_0). Then, several separable two-dimensional convolution layers each with separable filters, which may separate the input signals into multiple channels, may separately process each of the input multiple keyword clips. The number of the separated channels needed may be corresponding to the number of inputs. In the example of Figure 1, for the three keyword clips input to the NN model, the separable two-dimensional convolution layers in the model each needs to be able to separate these three inputs into three channels, respectively, to correspondingly process each of the three input keyword clips. There are three such separable two-dimensional convolution layers in the NN model of Figure 1, the first separable two-dimensional convolution layer with its three channels denoted as (Separable_conv2d_0_1, Separable_conv2d_0_2, Separable_conv2d_0_3), the second separable two-dimensional convolution layer with its three channels denoted as (Separable_conv2d_1_1, Separable_conv2d_1_2, Separable_conv2d_1_3), and the third separable two-dimensional convolution layer with its three channels denoted as (Separable_conv2d_2_1, Separable_conv2d_2_2, Separable_conv2d_2_3), respectively.

Three batch normalization layers (Batch normalization_0, Batch normalization_1, Batch normalization_2) and three spatial data average layers (Average pooling_0, Average pooling_1, Average pooling_2) are disposed before the three separable two-dimensional convolution layers, respectively, to optimize the output range.

Next, the NN model further comprises a depthwise two-dimensional convolution layer with its corresponding three channels (Depthwise_conv2d_1, Depthwise_conv2d_2, Depthwise_conv2d_3) following to another one batch normalization layer (Batch normalization_3), and then a three-channel flattening (Flatten_0_1, Flatten_0_2, Flatten_0_3) layer transforms the two-dimensional matrix of features into vector data in each of the channels. After a data concatenate and fully connected layer (Concatenate_0) for concatenating, as well as two dense layers (Dense_0, Dense_1) for converging the data twice, respectively, the NN acoustic model may generate a prediction and may output the probability of the keyword clip 3 same as the keyword clips 1 and 2 at its output side. In this example, The NN acoustic model may be alternatively pruned to be a depthwise separable convolutional neural network (DSCNN) model to fit on embedded system with quantization aware optimization.

As known by those skilled in the art, neural networks are all matrix operations with weights, and activations may add nonlinearity to those matrix operations. In the training process to the neural network, all the weights and activations are optimized.

Generally, the weights and activations of the neural networks are trained with floating point, while fixed-point weights are already proved to be sufficient and working with similar accuracy compared to the floating-point weights. Since Microcontroller Unit (MCU) systems usually have limited memory, it is required to perform the post-training quantization, which is a conversion technique that can reduce model size while also improving controller and hardware accelerator latency, with little degradation in model accuracy. For example, if the weights in 32-bit floating point are quantized to 8-bit fixed point, the model will be reduced by four times smaller, and speed up three times.

For the NN model provided in the present disclosure, the quantization flow using 8-bit is used to represent all the weights and activations. The representation is fixed for a given layer but can be different in other layers. For example, it can represent the range [-128, 127] with a step of 1 and it can also represent the range [-512, 508] with a step of 4. In this way, the weights are quantized to 8-bits one layer at a time by finding the optimal step for each layer that minimizes the loss in accuracy. After all the weights are quantized, the activations are also quantized in a similar way to find the appropriate step for each layer.

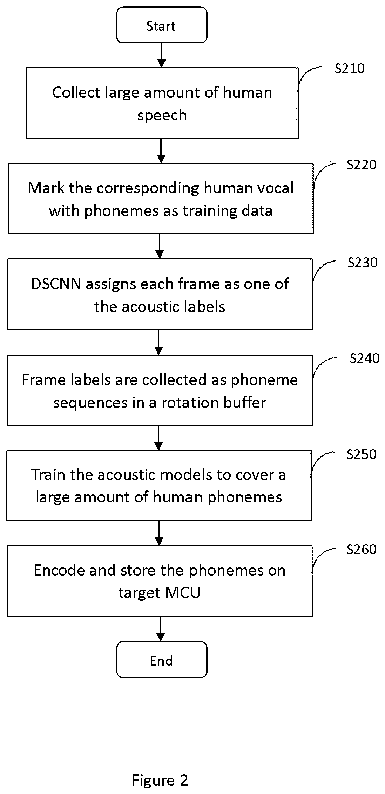

Figure 2 shows an example flowchart of the training procedure to the NN acoustic model. The procedure starts and a large amount of human speech is collected in Step S210. In a way of example, the large amount of human speech may be collected from known general voice recognition datasets designed for machine learning, such as Google speech command dataset. As for each language has its own phonemic system, and a phoneme is the smallest distinctive unit in phonetics, it can be assumed that the human vocal included among the collected human speech may be covered by a finite set of phonemes.

In step S220, the corresponding human vocal may be marked with the phonemes as the training data. The phonemes marking the corresponding human vocal are divided into multiple frames to input to the model for training. As previously described, in the example, each frame here may be set in size of about 1 second.

In step S230, the NN training results inferences each frame as one of the acoustic labels, wherein some of the human vocal ambiguous are approximately marked with the phonemes from the finite set. The frame labels are collected as phoneme sequences in a rotation buffer in step S240.

The NN acoustic model should be trained to cover a sufficient large amount of human phonemes, as shown in step S250 of Figure 2. For example, the sufficient large amount of phoneme sequences may be obtained by marking such as ten thousand people each speaking 100 sentences. Running the large amount of the human phonemes into the NN acoustic model for training the model, the output of the model in training is the probability of correctly distinguishing the input phonemes into the preset categories, i.e., the NN acoustic model outputs the probability of correctly determining the input phonemes to the pre-expected phoneme sequence from the multiple people. The trained model shall be able to distinguish human speech and achieve a certain accuracy rate, for example, the accuracy rate being higher than 90%.

At last, in step S260, The phonemes marking the typical human vocal are encoded and stored on a target MCU. Considering that the trained NN acoustic model shall be eventually loaded into embedded systems, these phonemes need to be encoded to be suitable for storing in the MCU and running on various embedded platforms of devices.

The trained model may be used to detect user-customized keywords. In the present disclosure, the utilization of the NN acoustic model to detect user-customized keywords may comprise two parts of keyword registration and keyword detection, respectively.

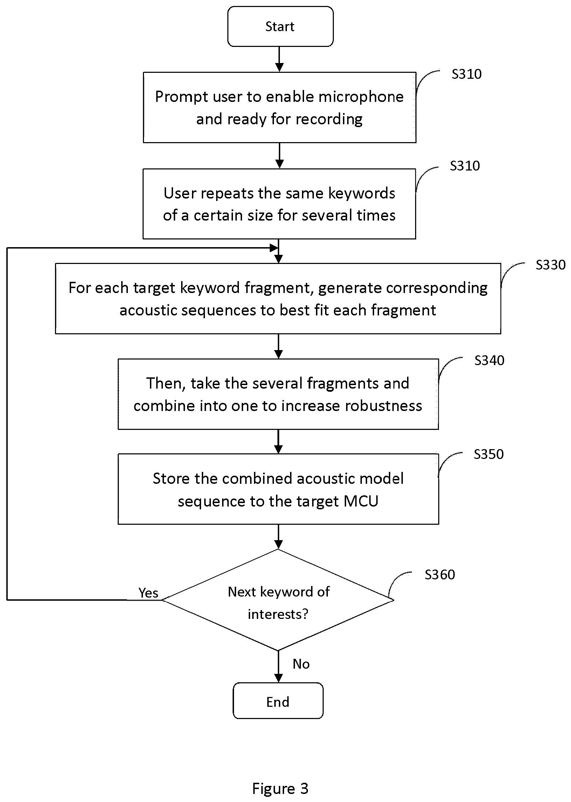

Figure. 3 shows an example flowchart of the keyword registration to the NN acoustic model. When a user intends to use some custom commands or even any other idioms of interests as the keywords, the user may firstly register each keyword into the model to become the template of the keyword.

In step S310, the user may get prompted to enable the microphone and be ready for recording. The user repeats the same keywords and record audio target keyword fragments of a certain size that he wants to register on the model for several times in step S320. In a way of example, but not limited to, the user may repeat the same keywords of size 3-5 seconds for three times, and thus the three audio fragments of 3-5s each are recorded.

In step S330, each of the target keyword fragments may be marked by using such as those phonemes store in the target MCU when training the model, which may generate corresponding acoustic sequences to best fit each fragment, and in step S340, the fragments of acoustic sequences may be combined into one to increase robustness, i.e., the three fragments of the corresponding acoustic sequences in the example are combined into one combined acoustic model sequence by using some known optimization algorithms, such as by comparing and averaging. And then, the combined acoustic model sequence may be stored to the target MCU to be used as one template of the key word in subsequent part of the keyword detection. Here, the user optionally may register one keyword for more than one template, and use these templates to detect the keyword at a time to increase the probability of the system accurately detecting the keyword. For example, the user may repeat and record the keyword with different tones to register two templates for this keyword. These two templates are corresponding to the keyword clip 1 and 2, respectively, to be input to the model of Figure 1 at a time.

For multiple keywords that the user intends to register, the above steps S330, S340 and S350 are repeated for each keyword of interests, as shown in the step S350 in Figure 3. After the user registers his/her own keywords of interest into the NN acoustic model, the model can be used to detect the each keyword from an input speech in real time.

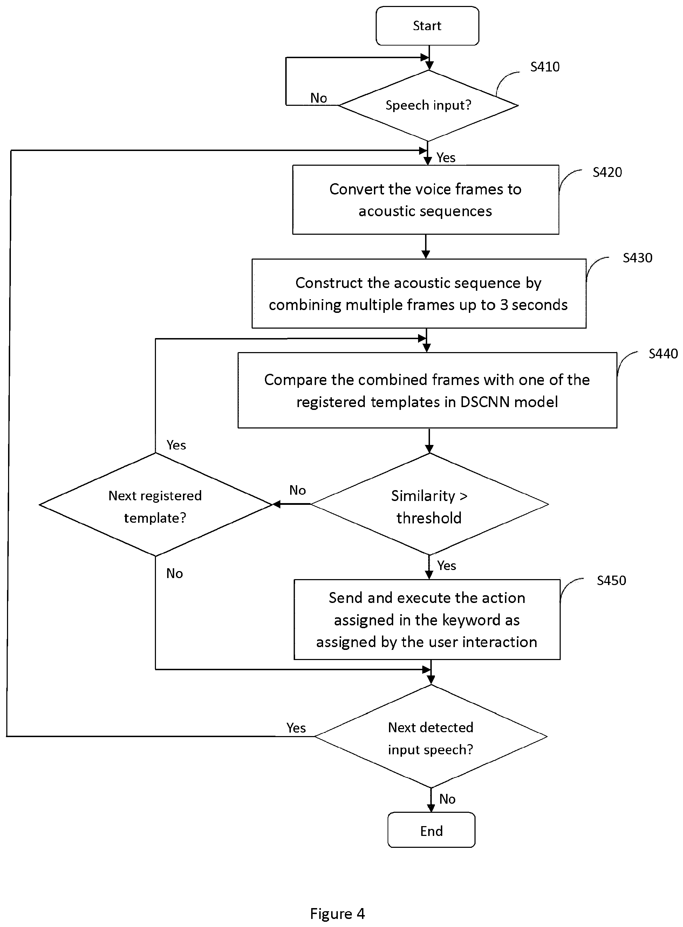

Figure 4 shows an example flowchart of the keyword detection. When starting, the user has registered, for example, N keywords and stored their templates in the target MCU. In step S410, a voice activity detector on working may determine if there comes speech input. Once a speech input is detected, voice frames with stronger energy may be abstract from the speech. These voice frames may be converted to the acoustic sequences in step S420 after marking each frame with the phonemes previously stored in the target MCU. The acoustic sequences then may be constructed for example up to 3 seconds by combining multiple frames in step S430. Here, the size of the constructed acoustic sequences may depend on the size of the templates of the key word to be used for comparison, because the acoustic sequences shall be compared with each of the templates of target keywords in the NN acoustic model. In the example, if the registered templates of all the keywords in the model has been set to be 3s, all the combined multiple frames of the acoustic sequence are thus constructed to be up to 3 seconds, accordingly.

Next, in step S440, the acoustic sequences of the speech input from the Voice Activity Detector is currently stored in a buffer of the system, and the N registered keywords have been stored in the Target MCU. Running the NN acoustic model, the similarity between the acoustic sequences and the pre-registered templates of the keywords can be thus determined in the provided NN of Figure 1 by comparing the acoustic sequences in the buffer with each of the pre-registered acoustic model sequences in the target MCU.

As mentioned earlier, each of the N keywords has pre-registered with its more than one template and stored them in the target MCU, and these templates may be input to the NN model as some of keyword clips, and the voice frames of the real-time speech input may be input to the model as the other keyword clips. Referring to the example of Figure 1, at first, the first template and the second template of the first of N keywords as the keyword clips 1 and 2, respectively, are input to the NN acoustic model, and the acoustic sequence in the buffer is input as keyword clip 3. The NN acoustic model may output the probability of the keyword clip 3 same as the keyword clips 1 and 2. If the input acoustic sequence is not similar to the one of the input pre-registered acoustic model sequences, that is, the output probability is not higher than a pre-set threshold, the pre-registered two templates of the next one of the N keyword are input to the NN model as the keyword clips 1 and 2, respectively, and the acoustic sequence is again input as keyword clip 3, to run the comparison again in the NN model. Keeping comparing the acoustic sequence in buffer with the two templates of each of the N keywords, till the input acoustic sequence is determined as being similar enough to the one of the pre-registered acoustic model sequences, that is, the output probability is higher than the pre-set threshold (for example, the similarity > 90%), the two are determined as a match, and the matched keyword is spotted out. Then execute the corresponding assigned action of the key word as assigned by the user interaction in step S450, and the procedure moves to detect the next real-time speech input. On the other hand, if the input acoustic sequence is not similar to any one of the pre-registered templates of the N keywords in the target MCU, it is determined that the speech input of the user does not contain any keyword. The comparison in the model moves to the next speech input. Otherwise, the detection procedure ends in case no next speech input from the voice activity detector.

The KWS method based on the NN acoustic model in the present disclosure only recognizes a particular set of words as provided from the custom pre-registered dataset. By getting rid of natural language processing and with limited predetermined keyword dataset, normally up to 3 seconds per keyword, the model size was able to come down from Gigabytes to a few hundred kilobytes. Thus, he KWS system based on the NN acoustic model may be run in a MCU or a processor, and may be deployed into and fit on embedded systems with quantization aware optimization. And an end-to-end architecture flow to use voice as interface in real time is further proposed in the present disclosure, accordingly. The user may assign operations to control any network free device, such as car or watch, by speaking a set of end user customized local commands by the user interaction.

The KWS system based on the NN acoustic model in the present disclosure tolerates for dynamically adding and deleting keywords by remapping new keywords as individual acoustic model sequences. This is achieved by comparing sequence matching in the phoneme spaces instead of comparing directly in predetermined acoustic space. To accomplish this, the acoustic model cross comparison model is relaxed from global optimization to local minimum distance to each distribution.

Any combination of one or more computer readable medium(s) may be utilized to perform the KWS method based on the NN acoustic model in the present disclosure. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

While exemplary embodiments are described above, it is not intended that these embodiments describe all possible forms of the present disclosure. Rather, the words used in the specification are words of description rather than limitation, and it is understood that various changes may be made without departing from the scope of the present disclosure. The scope for protection is defined as per the appended claims.

## Claims

1. A keyword spotting method based on a neural network, NN, acoustic model, comprising following steps of:
recording (320), via a microphone, audio fragments of a plurality of target keywords from a user;
generating, for each of the plurality of target keywords and based on the audio fragments, a template acoustic model sequence to generate a plurality of template acoustic model sequences;
registering, in a microcontroller unit, MCU, the plurality of template acoustic model sequences to be inputs to the NN acoustic model;
detecting (420), by a voice activity detector, a speech input of the user;
comparing (440) voice frames of the speech input with each of the templates of the plurality of target keywords by inputting both an acoustic model sequence of the speech input and the plurality of template acoustic model sequences into the NN acoustic model;
wherein each of the template acoustic model sequences is generated by marking the corresponding audio fragments with phonemes and storing the generated acoustic model sequences in the MCU, and wherein the NN acoustic model compares an acoustic sequence of the speech input marked with phonemes with the stored acoustic model sequences marked with phonemes.

2. The keyword spotting method of claim 1, wherein the NN acoustic model comprises at least one separable two-dimensional convolutional layer with a number of channels, and the number of the channels corresponding to a number of inputs of the NN acoustic model.

3. The keyword spotting method of claim 2, wherein the voice frames of the speech input and the templates of the plurality of target keywords are input to the NN acoustic model as Mel-frequency cepstral coefficients, MFCCs, in form of Mel spectrograms.

4. The keyword spotting method of claim 1, wherein the NN acoustic model is trained before use with a training dataset comprising phonemes marking a large amount of human speech.

5. The keyword spotting method of claim 4, wherein the NN acoustic model is trained by using 8-bit quantization flow to represent weights and activations of the NN acoustic model.

6. The keyword spotting method of claim 1, wherein the each template acoustic model sequence is of size of 3-5 seconds.

7. The keyword spotting method of claim 6, wherein the speech input is represented by an acoustic sequence constructed from the voice frames, and the size in seconds of the acoustic sequence depends on the size of the template acoustic model sequence stored in the MCU.

8. The keyword spotting method of claim 1, wherein the keyword fragment included in the speech input is spotted in case that an output probability of the NN acoustic model that the speech input is the same as a template acoustic model sequence is higher than a pre-set threshold.

9. The keyword spotting method of claim 8, wherein the pre-set threshold is set to 90%.

10. The keyword spotting method of claim 1, wherein the NN acoustic model is a depthwise separable convolutional neural network.

11. A non-transitory computer readable medium storing instructions which, when processed by a microcontroller unit, MCU, causes the method of claim 1 to be performed.

12. The non-transitory computer readable medium of claim 11, wherein the voice frames of the speech input and the templates of the plurality of target keywords are input to the NN acoustic model as Mel-frequency cepstral coefficients, MFCCs, in form of Mel spectrograms.

13. The non-transitory computer readable medium of claim 11, wherein the NN acoustic model is trained before use with a training dataset comprising phonemes marking a large amount of human speech, and, preferably, the NN acoustic model is trained by using 8-bit quantization flow to represent weights and activations of the NN acoustic model.

14. The non-transitory computer readable medium of claim 11, wherein each template acoustic model sequence is of size of 3-5 seconds.

15. The non-transitory computer readable medium of claim 11, wherein each of the voice frames of the speech input comprises an acoustic sequence, and the size in seconds of the acoustic sequence depends on the size of the template acoustic model sequence stored in the MCU.

## Patentansprüche

1. Schlüsselworterkennungsverfahren auf Basis eines Akustikmodells eines neuronalen Netzes (NN-Akustikmodell), umfassend folgende Schritte:
Aufnehmen (320) von Audiofragmenten einer Mehrzahl von Zielschlüsselwörtern eines Benutzers über ein Mikrofon;
Erzeugen einer Vorlagen-Akustikmodellsequenz für jedes der Mehrzahl von Zielschlüsselwörtern und auf Basis der Audiofragmente, um eine Mehrzahl von Vorlagen-Akustikmodellsequenzen zu erzeugen;
Registrieren der Mehrzahl von Vorlagen-Akustikmodellsequenzen, die Eingaben in das NN-Akustikmodell sein sollen, in einer Mikrocontrollereinheit (MCU);
Erfassen (420) einer Spracheingabe des Benutzers durch einen Sprachaktivitätsdetektor;
Vergleichen (440) von Sprachrahmen der Spracheingabe mit jeder der Vorlagen der Mehrzahl von Zielschlüsselwörtern, indem sowohl eine Akustikmodellsequenz der Spracheingabe als auch die Mehrzahl von Vorlagen-Akustikmodellsequenzen in das NN-Akustikmodell eingegeben werden;
wobei jede der Vorlagen-Akustikmodellsequenzen erzeugt wird, indem die entsprechenden Audiofragmente mit Phonemen markiert werden und die erzeugten Akustikmodellsequenzen in der MCU gespeichert werden, und wobei das NN-Akustikmodell eine mit Phonemen markierte akustische Sequenz der Spracheingabe mit den gespeicherten, mit Phonemen markierten Akustikmodellsequenzen vergleicht.

2. Schlüsselworterkennungsverfahren nach Anspruch 1, wobei das NN-Akustikmodell mindestens eine separierbare zweidimensionale Faltungsschicht mit einer Anzahl von Kanälen umfasst und die Anzahl der Kanäle einer Anzahl von Eingaben des NN-Akustikmodells entsprechend.

3. Schlüsselworterkennungsverfahren nach Anspruch 2, wobei die Sprachrahmen der Spracheingabe und die Vorlagen der Mehrzahl von Zielschlüsselwörtern als Mel-Frequenz-Cepstrum-Koeffizienten (MFCCs) in Form von Mel-Spektrogrammen in das NN-Akustikmodell eingegeben werden.

4. Schlüsselworterkennungsverfahren nach Anspruch 1, wobei das NN-Akustikmodell vor der Verwendung mit einem Trainingsdatensatz trainiert wird, der Phoneme umfasst, die eine große Menge menschlicher Sprache markieren.

5. Schlüsselworterkennungsverfahren nach Anspruch 4, wobei das NN-Akustikmodell trainiert wird, indem ein 8-Bit-Quantisierungsfluss verwendet wird, um Gewichte und Aktivierungen des NN-Akustikmodells darzustellen.

6. Schlüsselworterkennungsverfahren nach Anspruch 1, wobei jede Vorlagen-Akustikmodellsequenz eine Größe von 3-5 Sekunden aufweist.

7. Schlüsselworterkennungsverfahren nach Anspruch 6, wobei die Spracheingabe durch eine aus den Sprachrahmen konstruierte akustische Sequenz dargestellt wird und die Größe der akustischen Sequenz in Sekunden von der Größe der in der MCU gespeicherten Vorlagen-Akustikmodellsequenz abhängt.

8. Schlüsselworterkennungsverfahren nach Anspruch 1, wobei das in der Spracheingabe enthaltene Schlüsselwortfragment erkannt wird, falls eine Ausgabewahrscheinlichkeit des NN-Akustikmodells dafür, dass die Spracheingabe mit einer Vorlagen-Akustikmodellsequenz übereinstimmt, höher als ein voreingestellter Schwellenwert ist.

9. Schlüsselworterkennungsverfahren nach Anspruch 8, wobei der voreingestellte Schwellenwert auf 90 % festgelegt ist.

10. Schlüsselworterkennungsverfahren nach Anspruch 1, wobei das NN-Akustikmodell ein tiefenweise separierbares faltendes neuronales Netz ist.

11. Nichtflüchtiges computerlesbares Medium, das Anweisungen speichert, die bei Verarbeitung durch eine Mikrocontrollereinheit (MCU) bewirken, dass das Verfahren nach Anspruch 1 durchgeführt wird.

12. Nichtflüchtiges computerlesbares Medium nach Anspruch 11, wobei die Sprachrahmen der Spracheingabe und die Vorlagen der Mehrzahl von Zielschlüsselwörtern als Mel-Frequenz-Cepstrum-Koeffizienten (MFCCs) in Form von Mel-Spektrogrammen in das NN-Akustikmodell eingegeben werden.

13. Nichtflüchtiges computerlesbares Medium nach Anspruch 11, wobei das NN-Akustikmodell vor der Verwendung mit einem Trainingsdatensatz trainiert wird, der Phoneme umfasst, die eine große Menge menschlicher Sprache markieren, und wobei das NN-Akustikmodell vorzugsweise trainiert wird, indem ein 8-Bit-Quantisierungsfluss verwendet wird, um Gewichte und Aktivierungen des NN-Akustikmodells darzustellen.

14. Nichtflüchtiges computerlesbares Medium nach Anspruch 11, wobei jede Vorlagen-Akustikmodellsequenz eine Größe von 3-5 Sekunden aufweist.

15. Nichtflüchtiges computerlesbares Medium nach Anspruch 11, wobei jeder der Sprachrahmen der Spracheingabe eine akustische Sequenz umfasst und die Größe der akustischen Sequenz in Sekunden von der Größe der in der MCU gespeicherten Vorlagen-Akustikmodellsequenz abhängt.

## Revendications

1. Procédé de repérage de mots-clés basé sur un modèle acoustique de réseau neuronal, NN, comprenant les étapes suivantes :
l'enregistrement (320), via un microphone, de fragments audio d'une pluralité de mots-clés cibles d'un utilisateur ;
la génération, pour chacun de la pluralité de mots-clés cibles et sur la base des fragments audio, d'une séquence de modèle acoustique de gabarit pour générer une pluralité de séquences de modèle acoustique de gabarit ;
l'enregistrement, dans une unité de microcontrôleur (MCU), de la pluralité de séquences de modèle acoustique de gabarit pour être des entrées du modèle acoustique NN ;
la détection (420), par un détecteur d'activité vocale, d'une entrée vocale de l'utilisateur ;
la comparaison (440) de trames vocales de l'entrée vocale avec chacun des gabarits de la pluralité de mots-clés cibles en entrant à la fois une séquence de modèle acoustique de l'entrée vocale et la pluralité de séquences de modèle acoustique de gabarit dans le modèle acoustique NN ;
dans lequel chacune des séquences de modèle acoustique de gabarit est générée en marquant les fragments audio correspondants avec des phonèmes et en stockant les séquences de modèle acoustique générées dans le MCU, et dans lequel le modèle acoustique NN compare une séquence acoustique de l'entrée vocale marquée avec des phonèmes avec les séquences de modèle acoustique stockées marquées avec des phonèmes.

2. Procédé de repérage de mots-clés selon la revendication 1, dans lequel le modèle acoustique NN comprend au moins une couche de convolution bidimensionnelle séparable avec un nombre de canaux, et le nombre des canaux correspondant à un nombre d'entrées du modèle acoustique NN.

3. Procédé de repérage de mots-clés selon la revendication 2, dans lequel les trames vocales de l'entrée vocale et les gabarits de la pluralité de mots-clés cibles sont entrés dans le modèle acoustique NN en tant que coefficients cepstraux de fréquence Mel, MFCC, sous forme de spectrogrammes Mel.

4. Procédé de repérage de mots-clés selon la revendication 1, dans lequel le modèle acoustique NN est entraîné avant utilisation avec un ensemble de données d'entraînement comprenant des phonèmes marquant une grande quantité de parole humaine.

5. Procédé de repérage de mots-clés selon la revendication 4, dans lequel le modèle acoustique NN est entraîné à l'aide d'un flux de quantification à 8 bits pour représenter des poids et des activations du modèle acoustique NN.

6. Procédé de repérage de mots-clés selon la revendication 1, dans lequel chaque séquence de modèle acoustique de gabarit a une durée de 3 à 5 secondes.

7. Procédé de repérage de mots-clés selon la revendication 6, dans lequel l'entrée vocale est représentée par une séquence acoustique construite à partir des trames vocales, et la durée en secondes de la séquence acoustique dépend de la durée de la séquence de modèle acoustique de gabarit stockée dans le MCU.

8. Procédé de repérage de mots-clés selon la revendication 1, dans lequel le fragment de mot clé inclus dans l'entrée vocale est repéré dans le cas où une probabilité de sortie du modèle acoustique NN que l'entrée vocale soit la même qu'une séquence de modèle acoustique de gabarit est supérieure à un seuil prédéfini.

9. Procédé de repérage de mots-clés selon la revendication 8, dans lequel le seuil prédéfini est fixé à 90 %.

10. Procédé de repérage de mots-clés selon la revendication 1, dans lequel le modèle acoustique NN est un réseau neuronal convolutif séparable en profondeur.

11. Support non transitoire lisible par ordinateur stockant des instructions qui, lorsqu'elles sont traitées par une unité de microcontrôleur, MCU, entraînent la réalisation du procédé selon la revendication 1.

12. Support non transitoire lisible par ordinateur selon la revendication 11, dans lequel les trames vocales de l'entrée vocale et les gabarits de la pluralité de mots-clés cibles sont entrés dans le modèle acoustique NN en tant que coefficients cepstraux de fréquence Mel, MFCC, sous forme de spectrogrammes Mel.

13. Support non transitoire lisible par ordinateur selon la revendication 11, dans lequel le modèle acoustique NN est entraîné avant utilisation avec un ensemble de données d'entraînement comprenant des phonèmes marquant une grande quantité de parole humaine, et, de préférence, le modèle acoustique NN est entraîné à l'aide d'un flux de quantification à 8 bits pour représenter des poids et des activations du modèle acoustique NN.

14. Support non transitoire lisible par ordinateur selon la revendication 11, dans lequel chaque séquence de modèle acoustique de gabarit a une durée de 3 à 5 secondes.

15. Support non transitoire lisible par ordinateur selon la revendication 11, dans lequel chacune des trames vocales de l'entrée vocale comprend une séquence acoustique, et la durée en secondes de la séquence acoustique dépend de la durée de la séquence de modèle acoustique de gabarit stockée dans le MCU.
